# EUROPÄISCHE PATENTSCHRIFT

(11) **EP 0 853 718 B1**
(45) Veröffentlichungstag und Bekanntmachung des Hinweises auf die Patenterteilung: **03.03.1999**
(21) Anmeldenummer: 96931775.9
(22) Anmeldetag: 05.09.1996
(51) Int. Cl.: F01N 3/20, F01N 3/28, B01J 35/00, B01J 35/04

(54) **ELEKTRISCH BEHEIZBARER WABENKÖRPER MIT VERSTEIFTEN STROMVERTEILUNGSSTRUKTUREN**
ELECTRICALLY HEATABLE HONEYCOMB ELEMENT WITH STIFFENED CURRENT-DISTRIBUTING STRUCTURES
CORPS EN NID D'ABEILLES CHAUFFE ELECTRIQUEMENT, A STRUCTURES RENFORCEES DE REPARTITION DE COURANT

(30) Priorität: 05.10.1995 DE 19537131
(43) Veröffentlichungstag der Anmeldung: 22.07.1998
(73) Patentinhaber: Emitec Gesellschaft für Emissionstechnologie mbH, 53797 Lohmar (DE)
(72) Erfinder: Brück, Rolf, D-51429 Bergisch Gladbach (DE); Bergau, Norbert, D-53804 Much (DE)
(74) Vertreter: Kahlhöfer, Hermann, Dipl.-Phys.
(86) Internationale Anmeldenummer: EP9603909
(87) Internationale Veröffentlichungsnummer: WO9713056

(56) Entgegenhaltungen:
- EP-A- 0 618 353
- DE-A- 4 307 431
- DE-A- 4 434 673
- DE-U- 9 317 050

## Beschreibung

Die vorliegende Erfindung bezieht sich auf einen elektrisch beheizbaren Wabenkörper sowie eine Vorrichtung zur katalytischen Umsetzung von Gasen, insbesondere von Abgasen einer Verbrennungskraftmaschine.

Durch die WO 92/13636 ist ein Wabenkörper mit mehreren, gegeneinander abgestützten Scheiben bekannt. Der Wabenkörper weist wenigstens zwei Scheiben auf, die voneinander beabstandet sind und nacheinander von einem Abgas durchströmt werden.

Es ist ferner eine Vorrichtung zur katalytischen Umsetzung von Gasen, insbesondere von Abgasen eines Abgassystems, bekannt, bei der ein erster und ein zweiter Wabenkörper nacheinander von einem Fluid durchströmbar sind. Die Wabenkörper sind mittels in die Wabenkörper hineinragender Stützelemente miteinander verbunden. Um die katalytische Umsetzung von Abgasen möglichst schnell zu erreichen, ist der eine Wabenkörper elektrisch beheizbar. Der Wabenkörper weist hierzu wenigstens zwei mit der Mantelfläche des Wabenkörpers verbundene Stromverteilungsstrukturen auf, die jeweils mit einem elektrischen Stromanschluß verbunden sind. Die Strukturen dienen einer gleichmäßigen Stromverteilung. Der elektrisch beheizbare Wabenkörper ist mit einem Mantelrohr unter Zwischenschaltung einer Isolierschicht verbunden. Das Mantelrohr weist wenigstens zwei nach außen weisende Sicken auf, in die entsprechend geformte Sicken der Stromverteilungsstrukturen hineinragen. Die Strukturen sind mit nach außen ragenden Stiften versehen, die gegenüber dem Mantelrohr elektrisch isoliert sind. Die Stifte dienen als Anschlüsse zur Stromversorgung des beheizbaren Katalysators. Bedingt durch unterschiedliches thermisches Ausdehnungsverhalten der einzelnen Komponenten der Vorrichtung wird die Verbindungsstelle zwischen den Stiften und den Schalen mechanisch beansprucht. Um diese mechanische Beanspruchung zu verringern, sind die Stromverteilungsstrukturen mit den nach außen weisenden Sicken versehen, wodurch die auftretenden Kräfte von den Strukturen an das Mantelrohr übertragen werden. Eine solche Vorrichtung ist in P. F. Küper, W. Maus et al in SAE Technical Papers, Series 940465 "Ultra-Low Power Electrically-Heated Catalyst System" sowie in dem Gebrauchsmuster G 93 17 050 Ul beschrieben.

Durch die Veröffentlichung "Elektrisch beheizbarer Katalysator EMICAT", September 1995, der Firma Emitec Gesellschaft für Emissionstechnologie mbH ist ein Heizkatalysator der Serie 6 bekannt geworden, der zwei in einem gemeinsamen Mantelrohr benachbart angeordnete, nacheinander von einem Gas durchströmbare Wabenkörper umfaßt. Der erste Wabenkörper ist elektrisch beheizbar. Dieser ist mit Abstand zum äußeren Mantelrohr, durch einen Ringspalt getrennt, in diesem angeordnet, wobei die beiden Wabenkörper durch elektrisch isolierende Stützelemente miteinander verbunden sind.

Bei den bekannten elektrisch beheizbaren Wabenkörpern, deren Querschnittsfläche insbesondere durch einen Luftspalt elektrisch unterteilt ist, besteht das Problem, daß diese eine relativ geringe Eigensteifigkeit aufweisen. Ziel der vorliegenden Erfindung ist es, einen elektrisch beheizbaren Wabenkörper anzugeben, der eine höhere Steifigkeit, insbesondere im Außenbereich, aufweist. Ein weiteres Ziel der vorliegenden Erfindung ist es, eine Vorrichtung zur katalytischen Umsetzung von Gasen, insbesondere von Abgasen einer Verbrennungskraftmaschine, mit wenigstens einem elektrisch beheizbaren Wabenkörper anzugeben, bei der eine Bypass-Strömung durch den Ringspalt zwischen dem elektrisch beheizbaren Wabenkörper und dem Mantelrohr weitgehend vermieden wird.

Diese Ziele werden durch einen elektrisch beheizbaren Wabenkörper mit den Merkmalen des Anspruchs 1 sowie durch eine Vorrichtung zur katalytischen Umsetzung von Gasen, insbesondere von Abgasen einer Verbrennungskraftmaschine, mit den Merkmalen des Anspruchs 15 erreicht. Vorteilhafte Weitergestaltungen des Wabenkörpers und der Vorrichtung sind Gegenstand der jeweils abhängigen Ansprüche.

Der elektrisch beheizbare Wabenkörper zur katalytischen Umsetzung von Gasen, insbesondere von Abgasen einer Verbrennungskraftmaschine, der eine Vielzahl durch ein Fluid durchströmbare Kanäle aufweist, und bezüglich seiner Querschnittsfläche und/oder axialen Erstreckung elektrisch aufgeteilt ist, insbesondere mäanderförmig und/oder spiralförmig, zeichnet sich dadurch aus, daß an der Mantelfläche des Wabenkörpers wenigstens zwei schalenförmig ausgebildete Stromverteilungsstrukturen, die durch einen Ringspalt (17) vollständig von einem Mantelrohr (20) getrennt sind, vorgesehen sind, wobei jede Stromverteilungsstruktur wenigstens einen sich etwa in radialer Richtung und in Umfangsrichtung erstreckenden Kragen aufweist. Durch die Ausbildung wenigstens eines sich in radialer Richtung und in Umfangsrichtung erstreckenden Kragens wird der Stromverteilungsstruktur, die auf der Mantelfläche des Wabenkörpers angeordnet ist, eine erhöhte Steifigkeit verliehen, wodurch der Wabenkörper als solcher ebenfalls eine höhere Eigensteifigkeit aufweist. Durch die höhere Eigensteifigkeit des Wabenkörpers kann auf zusätzliche Maßnahmen hinsichtlich der Aufnahme von Dehnungskräften verzichtet werden, da diese Kräfte von der Stromverteilungsstruktur aufgenommen werden. Der Ringspalt zum Mantelrohr, der auch der elektrischen Isolierung dient kann auch bei hohen Betriebsbelastungen sehr schmal sein, wodurch wiederum kaum Gas neben dem Wabenkörper entlangströmen kann.

Die Stromverteilungsstruktur weist vorzugsweise in Umfangsrichtung betrachtet mehrere im Abstand zueinander ausgebildete Kragen oder Kragenabschnitte auf. Diese Kragen können radial auswärts und/oder radial einwärts gerichtet sein. Die radial einwärts gerichteten Kragen decken nur einen kleinen Flächenabschnitt der Querschnittsfläche des Wabenkörpers ab, so daß dieser in seiner Funktionsfähigkeit nicht beeinträchtigt wird. Vorzugsweise weist der Wabenkörper Kragen auf, die in einer gemeinsamen Ebene ausgebildet sind.

Gemäß einem weiteren vorteilhaften Gedanken wird ein Wabenkörper vorgeschlagen, bei dem jede Stromverteilungsstruktur in einer ersten Ebene sowie in einer zweiten Ebene mehrere, im Abstand zueinander ausgebildete, Kragenabschnitte aufweist, wobei die Kragenabschnitte der ersten und der zweiten Ebene Spalten zwischen den Kragenabschnitten der jeweils anderen Ebene wenigstens teilweise, vorzugsweise vollständig, überlappen. Durch diese Überlappung entsteht in Strömungsrichtung des Gases betrachtet ein quasi geschlossener Kragen. Der bzw. die Kragen können auf der Stromverteilungsstruktur als gesonderte Bauteile aufgebracht werden. Vorteilhafter ist es, wenn jeder Kragen ein integraler Bestandteil einer Stromverteilungsstruktur ist. Die Stromverteilungsstruktur und der Kragen sind einstückig ausgebildet. Bevorzugt ist eine Ausbildung des Wabenkörpers, bei der die Kragen durch Bördeln der Stromverteilungsstruktur gebildet sind. Die Herstellung solcher Stromverteilungsstrukturen ist relativ einfach und kostengünstig.

Der vorbeschriebene elektrisch beheizbare Wabenkörper ist bevorzugt für Vorrichtungen zur katalytischen Umsetzung von Gasen, insbesondere von Abgasen einer Verbrennungskraftmaschine, geeignet. Die Vorrichtung weist wenigstens einen ersten und einen zweiten in einem gemeinsamen Mantelrohr benachbart angeordnete, nacheinander von einem Abgas durchströmbare Wabenkörper auf. Der elektrisch beheizbare Wabenkörper ist mit dem benachbarten Wabenkörper durch elektrisch isolierende Stützelemente verbunden. Der elektrisch beheizbare Wabenkörper ist mit Abstand zum äußeren Mantelrohr in diesem angeordnet. Durch die Ausbildung der Kragen, die sich radial auswärts und in Umfangsrichtung erstrecken, wird wenigstens teilweise eine Bypass-Strömung des Gases um den elektrisch beheizbaren Wabenkörper verhindert. Vorzugsweise erstreckt sich der Kragen über die gesamte Länge der Stromverteilungsstruktur in Umfangsrichtung.

Eine weitere vorteilhafte Ausgestaltung des Wabenkörpers ist dadurch gebildet, daß der oder die Kragen eine Dichtung, vorzugsweise eine Labyrinthdichtung, zwischen dem Mantelrohr und den Stromverteilungsstrukturen bilden. Durch diese Maßnahme wird ein Umströmen des Wabenkörpers nahezu verhindert, wodurch ein verbesserter Wirkungsgrad des Wabenkörpers als Katalysatorträger erreichbar ist. Zur weiteren Abdichtung und Stabilisierung des Wabenkörpers wird vorgeschlagen, daß zwischen einer jeden Stromverteilungsstruktur und dem Mantelrohr eine Matte aus einem elektrisch isolierenden, temperaturbeständigen Werkstoff anordenbar ist. Bei der Matte handelt es sich vorzugsweise um eine Quellmatte, durch die der Ringspalt zwischen dem Mantelrohr und einer jeden Stromverteilungsstruktur abgedichtet wird. Die Stromverteilungsstrukturen sowie die in der ersten Ebene und in der zweiten Ebene vorgesehenen Kragenabschnitte bilden hierbei eine Aufnahme, in der die Matte anordenbar ist.

Die Verbindung des elektrisch beheizbaren Wabenkörpers mit dem nachfolgenden Wabenkörper erfolgt vorzugsweise derart, daß wenigstens ein Teil der Stützelemente mit dem oder den Kragen des Wabenkörpers verbunden ist. Die Verbindung der Stützelemente mit dem oder den Kragen kann stoff- oder formschlüssig erfolgen. Der elektrische Wabenkörper weist für die Bindung mit den Stützelementen vorzugsweise in den Kragen mindestens eine Ausnehmung auf, in die ein Stützelement wenigstens hineinragt. Bei der Ausnehmung kann es sich um eine Bohrung oder um ein gestanztes Loch handeln. Gemäß einem weiteren vorteilhaften Gedanken wird vorgeschlagen, den Wabenkörper so auszubilden, daß die Ausnehmung sich vom Rand des Kragens zur Stromverteilungsstruktur hin erstreckt. Diese schlitzartig ausgebildete Ausnehmung hat den Vorteil, daß der Zusammenbau der Vorrichtung vereinfacht wird.

Gemäß einer weiteren vorteilhaften Weiterbildung wird eine Ausnehmung in einem Kragen vorgeschlagen, die einen ersten sich vom Rand des Kragens zur Stromverteilungsstruktur hin, insbesondere radial einwärts, erstreckenden Abschnitt und wenigstens einen sich an den ersten Abschnitt anschließenden in Umfangsrichtung erstreckenden Abschnitt aufweist. Hierdurch wird eine bajonettartige Verbindung der Kragen mit den Stützelementen erzielt.

Weitere Vorteile und Merkmale der Erfindung werden anhand der in der Zeichnung dargestellten Ausführungsbeispiele erläutert. Es zeigen:
- Figur 1: ein erstes Ausführungsbeispiel eines erfindungsgemäßen Wabenkörpers in der Vorderansicht,
- Figur 2: eine Seitenansicht von links entlang der Schnittlinie II-II nach Figur 1,
- Figur 3: ein zweites Ausführungsbeispiel eines erfindungsgemäßen Wabenkörpers im Querschnitt,
- Figur 4: ein drittes Ausführungsbeispiel eines erfindungsgemäßen Wabenkörpers in der Vorderansicht,
- Figur 5: eine Draufsicht des Wabenkörpers nach Figur 4,
- Figur 6: eine Ansicht von links entlang der Schnittlinie VI-VI der Figur 5,
- Figur 7: eine Draufsicht eines vierten Ausführungsbeispiels eines Wabenkörpers,
- Figur 8: eine Seitenansicht von links entlang der Schnittlinie VIII-VIII,
- Figur 9: ein fünftes Ausführungsbeispiel eines Wabenkörpers in der Draufsicht,
- Figur 10: eine Seitenansicht von links entlang der Schnittlinie X-X eines Wabenkörpers nach Figur 9,
- Figur 11: ein sechstes Ausführungsbeispiel eines Wabenkörpers im Querschnitt,
- Figur 12: eine Vorrichtung zur katalytischen Umsetzung von Abgasen im Schnitt,
- Figur 13: eine Teilansicht eines Wabenkörpers mit einer Ausnehmung im Kragen und
- Figur 14: eine Teilansicht eines Wabenkörpers mit einer Stromverteilungsstruktur mit Kragen und einer weiteren Ausführungsform einer Ausnehmung.

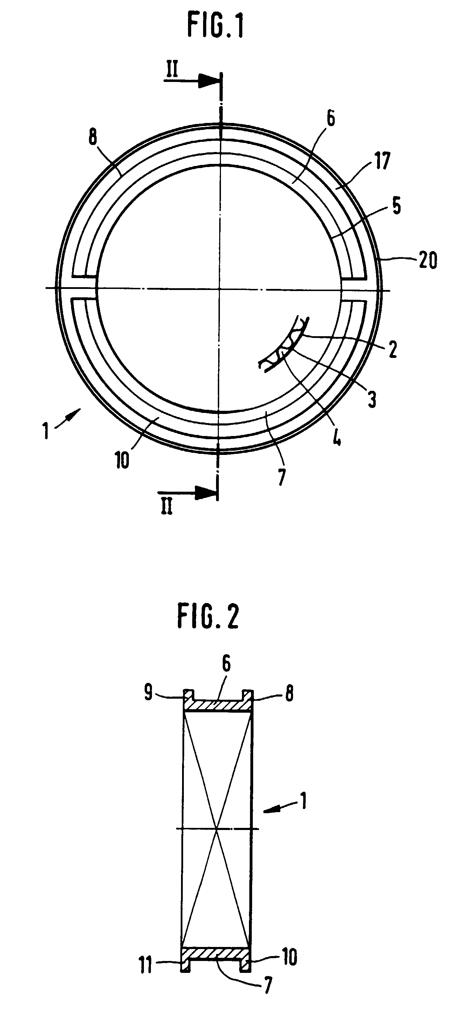

In der Figur 1 ist ein erstes Ausführungsbeispiel eines elektrisch beheizbaren Wabenkörpers 1 zur katalytischen Umsetzung von Abgasen, insbesondere von Abgasen einer Verbrennungskraftmaschine, dargestellt. Der Wabenkörper 1 ist aus mehreren Lagen schwach gewellter Bleche 2 und stärker gewellter Bleche 3 aufgebaut, die eine Vielzahl von durch ein Fluid durchströmbare Kanäle 4 bilden. An der Mantelfläche 5 des Wabenkörpers 1 sind zwei schalenförmig ausgebildete Stromverteilungsstrukturen 6, 7 angeordnet. Die Stromverteilungsstrukturen 6, 7 stehen miteinander nicht unmittelbar in einem elektrischen Kontakt. Nicht dargestellt sind in der Figur 1 die Stromzuführungen zu den jeweiligen Stromverteilungsstrukturen 6, 7, die mit einer entsprechenden Spannungsquelle verbunden sind. Die Stromverteilungsstrukturen 6, 7 sind durch einen Ringspalt 17 vollständig von einem sie konzentrisch umgebenden Mantelrohr 20 getrennt.

Jede Stromverteilungsstruktur 6, 7 weist zwei radial auswärts und in Umfangsrichtung sich erstreckende Kragen 8, 9 bzw. 10, 11 auf, wie dies besonders aus der Schnittdargestellung nach Figur 2 ersichtlich ist. Die Kragen 8, 9 bzw. 10, 11 sind mit der Stromverteilungsstruktur 6 bzw. 7 einstückig ausgebildet. Die einzelnen Kragen 8, 9, 10 und 11 sind durch Bördeln eines Randbereichs der Stromverteilungsstruktur 6 bzw. 7 gebildet.

Wie aus der Figur 2 ersichtlich ist, entspricht die axiale Erstreckung der Stromverteilungsstruktur 6 bzw. 7 der axialen Erstreckung des Wabenkörpers 1. Dies ist nicht zwingend. Die Stromverteilungsstrukturen 6, 7 können einzeln für sich oder gemeinsam mit dem oder den Kragen eine axiale Erstreckung aufweisen, die kleiner oder größer ist als die axiale Erstreckung des Wabenkörpers 1.

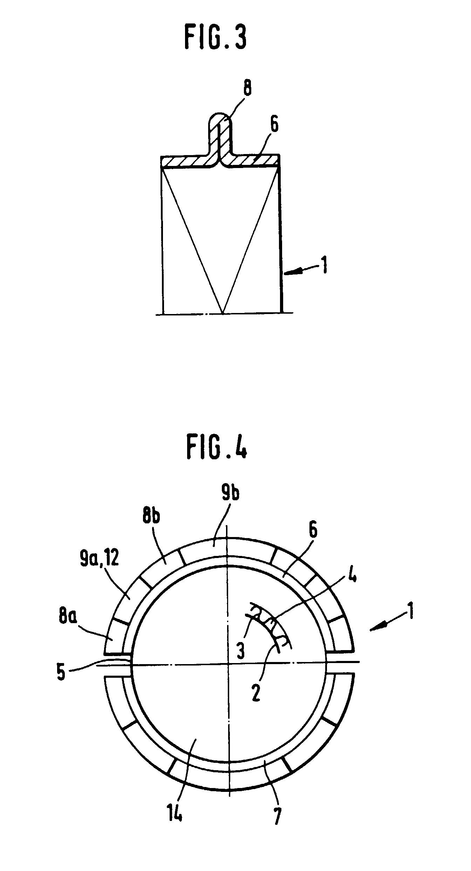

In der Figur 3 ist eine zweite Ausführungsform eines Wabenkörpers, der elektrisch beheizbar ist, dargestellt. Der Wabenkörper 1, welcher in der Figur 3 im Schnitt dargestellt ist, weist eine Stromverteilungsstruktur 6 auf, die mit einem radial auswärts gerichteten Kragen 8 ausgebildet ist. Der Kragen 8 erstreckt sich über den Umfang der Stromverteilungsstruktur 6. Der Wabenkörper kann eine entsprechende zweite Stromverteilungsstruktur nach Figur 3 aufweisen. Der Kragen 8 ist durch Aufeinanderfalten der Stromverteilungsstruktur 6 gebildet. Die Stromverteilungsstruktur 6 besteht hierzu vorteilhafterweise aus einem Blech.

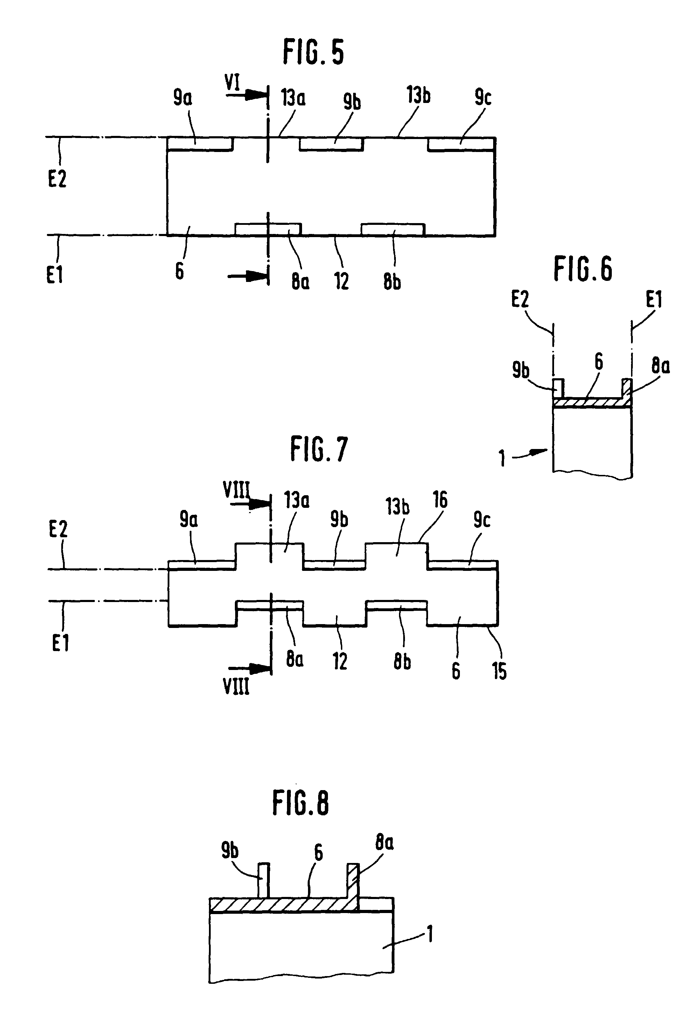

In der Figur 4 ist eine dritte Ausführungsform eines elektrisch beheizbaren Wabenkörpers 1 dargestellt. Der Wabenkörper umfaßt mehrere Lagen stark gewellter Bleche 3 und schwach gewellter Bleche 2, die Strömungskanäle 4 für ein Gas bilden. An der Mantelfläche 5 des Wabenkörpers 1 sind zwei im Abstand zueinander angeordnete Stromverteilungsstrukturen 6, 7 vorgesehen. Die Stromverteilungsstrukturen 6, 7 können mit dem Wabenkörper 1 verlötet sein. Jede Stromverteilungsstruktur 6, 7 weist in einer ersten Ebene E1 sowie in einer zweiten Ebene E2 mehrere, im Abstand zueinander ausgebildete Kragen auf, wie dies aus den Figuren 5 und 6 ersichtlich ist. Die Kragenabschnitte 8a, 8b in der Ebene E1 erstrecken sich teilweise in Umfangsrichtung der Stromzuführstruktur 6. Zwischen den Kragenabschnitten 8a, 8b ist ein Spalt 12 ausgebildet. In der Ebene E2 sind Kragenabschnitte 9a, 9b und 9c ausgebildet, die sich teilweise in Umfangsrichtung der Stromverteilungsstruktur 6 erstrecken. Die Kragenabschnitte 8a, 8b sowie 9a, 9b und 9c erstrecken sich radial auswärts.

Der Abstand in Umfangsrichtung zwischen den Kragenabschnitten 9a, 9b; 9b, 9c in der Ebene E2 ist so bemessen, daß die zwischen den Kragen 9a, 9b und 9b, 9c bestehenden Spalte 13 durch die Kragenabschnitte 8a bzw. 8b abgedeckt sind. Noch günstiger ist es, wenn sich gegenüberliegende Kragenabschnitte überlappen. Der Spalt 12, der zwischen den Kragenabschnitten 8a, 8b in der Ebene E1 besteht, ist durch den Kragenabschnitt 9b aus der Ebene E2 in axialer Richtung abgedeckt ist. Die Ebenen E1 und E2 verlaufen parallel zu der Stirnfläche 14 des scheibenförmigen Wabenkörpers 1. Wie aus der Figur 4 ersichtlich ist, bilden die Kragenabschnitte 8a, 8b und 9a, 9b, 9c für eine Abgasströmung in axialer Richtung des Wabenkörpers 1 einen quasi geschlossenen radial auswärts und in Umfangsrichtung sich erstreckenden Kragen. Entsprechenderweise ist die Stromverteilungsstruktur 7 des Wabenkörpers 1 nach Figur 4 ausgebildet.

In den Figuren 7 und 8 ist eine weitere Ausführungsform eines Wabenkörpers 1 mit versteiften Stromverteilungsstrukturen dargestellt. Die in den Figuren 7 und 8 dargestellte Ausführungsform stellt eine Variante der in den Figuren 4, 5 und 6 dargestellten Ausführungsform eines Wabenkörpers dar. Auch die in den Figuren 7 und 8 dargestellte Ausführungsform des Wabenkörpers weist eine Stromverteilungsstruktur 6 auf. Die Stromverteilungsstruktur 6 weist radial auswärts sich teilweise in Umfangsrichtung erstreckende Kragenabschnitte 8a, 8b auf, die in einer Ebene E1 ausgebildet sind. In einer zweiten Ebene E2, die im wesentlichen parallel zu der Ebene E1 liegt, sind radial auswärts vorstehend und sich teilweise in Umfangsrichtung erstreckende Kragenabschnitte 9a, 9b und 9c ausgebildet. Die Kragenabschnitte 8a, 8b und 9a, 9b, 9c sind dadurch gebildet, daß in die Stromverteilungsstruktur vom Längsrand 15 bzw. 16 her Einschnitte in axialer Richtung ausgebildet werden und die Abschnitte zwischen zwei benachbarten Einschnitten radial auswärts gebogen werden, wobei abwechselnd auf einen abgebogenen Abschnitt, der einen Kragenabschnitte 8a, 8b, 9a, 9b oder 9c bildet, ein nicht abgebogener Abschnitt folgt. Vorzugsweise weist jeder Kragenabschnitt 8a, 8b, 9a, 9b und 9c in der Umfangsrichtung die gleiche Erstreckung auf. Die Kragenabschnitte in der Ebene E1 bzw. in der Ebene E2 sind so zueinander ausgebildet, daß wenigstens unmittelbar in Umfangsrichtung betrachtet auf einen Kragenabschnitt in der Ebene E1 ein Kragenabschnitt in der Ebene E2, bzw. umgekehrt, folgt. Bevorzugt überlappen sich die Kragenabschnitte 8a, 8b, 9a, 9b, 9c wenigstens teilweise.

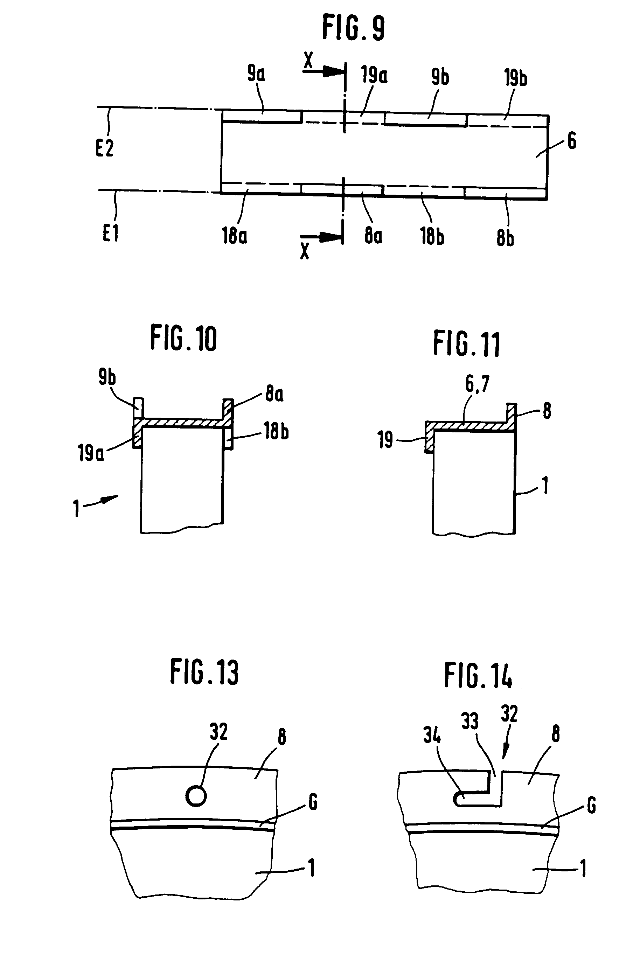

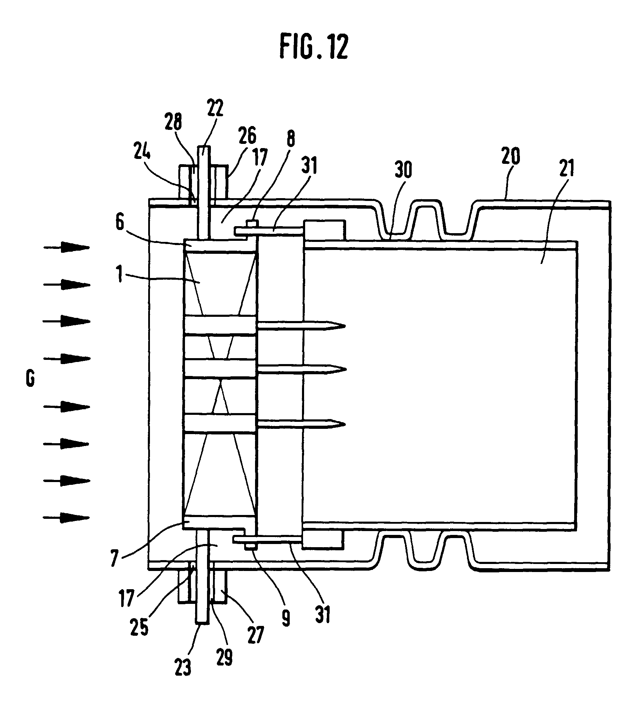

In den Figuren 9 und 10 ist eine weitere Ausführungsform eines Wabenkörpers 1 dargestellt. Der Wabenkörper weist wenigstens zwei Stromverteilungsstrukturen auf, wobei in der Draufsicht nach Figur 9 die Stromverteilungsstruktur 6 dargestellt ist. Die Stromverteilungsstruktur 6 weist radial auswärts und in Umfangsrichtung sich erstreckende Kragenabschnitte 8a, 8b, 9a und 9b auf. Die radial auswärts gerichteten Kragenabschnitte 8a, 8b, 9a, 9b erstrecken sich teilweise in Umfangsrichtung. Die Kragenabschnitte 8a, 8b sind in einer Ebene E1 ausgebildet. Mit Abstand und im wesentlichen parallel zu den Kragenabschnitten 8a, 8b sind die radial auswärts gerichteten Kragenabschnitte 9a, 9b ausgebildet. Die Kragenabschnitte 9a, 9b befinden sich in einer Ebene E2. Zwischen den Kragenabschnitten 8a, 8b bzw. 9a, 9b sind radial einwärts gerichtete Kragenabschnitte 18a, 18b bzw. 19a, 19b ausgebildet. Die radial einwärts gerichteten Kragenabschnitte 18a, 18b sowie 19a, 19b umgreifen klammerartig die Wabenstruktur 1. Zur Ausbildung der Stromverteilungsstruktur 6, wie sie in den Figuren 9 und 10 dargestellt ist, werden axiale Einschnitte ausgebildet und die zwischen den Einschnitten sich befindenden Abschnitte abwechselnd radial auswärts bzw. radial einwärts abgebogen, so daß die in den Figuren 9 und 10 dargestellte Stromverteilungsstruktur gebildet wird. Der Abstand zwischen den benachbarten radial auswärts gerichteten Kragenabschnitten 8a, 8b bzw. 9a, 9b ist vorzugsweise so bemessen, daß der Kragenabschnitt 8a, 8b den zwischen den Kragenabschnitten 9a, 9b bestehenden Spalt wenigstens teilweise überlappt.

Die Kragenabschnitte der Ebene E1 und die Kragenabschnitte der Ebene E2 sowie die Stromverteilungstruktur 6, 7 bildet jeweils eine Aufnahme, in die eine nicht dargestellte Matte eingelegt werden kann. Zur Halterung der Matte können die Kragenabschnitte 8a, 8b in der ersten Ebene E1 und/oder die Kragenabschnitte 9a, 9b in der Ebene E2 leicht gegeneinander geneigt sein.

Eine einfache Ausgestaltung eines elektrisch beheizbaren Wabenkörpers mit einer versteiften Stromverteilungsstruktur 6 bzw. 7 ist in der Figur 11 dargestellt. Die Stromverteilungsstruktur 6 bzw. 7 weist einen radial auswärts gerichteten Kragen 8 und einen radial einwärts gerichteten Kragen 19 auf. Der radial einwärts gerichtete Kragen 19 und der radial auswärts gerichtete Kragen 8 erstrecken sich in Umfangsrichtung über die gesamte Lange der Stromverteilungsstruktur 6, 7. Der radial einwärts gerichtete Kragen 19 liegt am Wabenkörper 1 an.

In der Figur 14 ist eine Vorrichtung zur katalytischen Umsetzung von Gasen, insbesondere von Abgasen einer Verbrennungskraftmaschine, dargestellt. Die Vorrichtung umfaßt zwei in einem gemeinsamen Mantelrohr 20 angeordnete, nacheinander von einem Gas G durchströmbare Wabenkörper 1, 21. Der erste Körper 1 ist mit Abstand zum gemeinsamen Mantelrohr 20 in diesem angeordnet und elektrisch beheizbar. Die äußere Mantelfläche des ersten Wabenkörpers 1 wird durch zwei schalenförmige Stromverteilungsstrukturen 6, 7 gebildet. Die Stromverteilungsstrukturen 6, 7 sind jeweils mit einem elektrischen Stromanschluß 22, 23 verbunden. Die Stromanschlüsse 22, 23 erstrecken sich durch im gemeinsamen Mantelrohr 20 ausgebildete Öffnungen 24, 25 radial auswärts. Die Stromanschlüsse 22, 23 durchdringen Verbindungsstücke 26, 27, die mit dem gemeinsamen Mantelrohr 20 verschweißt sind. Die Verbindungsstücke 26, 27 weisen jeweils eine Isolierschicht 28, 29 auf, so daß die Stromanschlüsse 22, 23 gegenüber dem gemeinsamen Mantelrohr 20 elektrisch isoliert sind.

Der Wabenkörper 21 weist ein inneres Mantelrohr 30 auf. Die Stromverteilungsstruktur 6 bzw. 7 ist durch Stützelemente 31 mit dem inneren Mantelrohr 30 verbunden. Jedes Stützelement 31 greift dabei in einen Kragen 8 bzw. 9 die Stützstruktur 6 bzw. 7.

Die Stützelemente 31 sind vorzugsweise so ausgebildet, daß diese elektrisch isolierend den Wabenkörper 1 mit dem Wabenkörper 21 verbinden. In den Figuren 13 und 14 sind Ausnehmungen 32 dargestellt, die in dem Kragen 8 der Stromzuführstruktur 6 ausgebildet sind. In der Figur 13 handelt es sich bei der Ausnehmung 32 um ein Loch, welches im Kragen 8 ausgebildet ist. Durch das Loch erstreckt sich ein Stützelement 31. In der Figur 14 ist eine weitere Ausgestaltung einer Ausnehmung 32 zur Aufnahme eines Stützelementes 31 dargestellt. Die Ausnehmung 32 weist einen ersten radial einwärts gerichteten zum Rand hin offenen Abschnitt 33 auf. An den Abschnitt 33 schließt sich ein im wesentlichen in Umfangsrichtung ausgebildeter Abschnitt 34 an.

Der elektrisch beheizbare Wabenkörper sowie eine Vorrichtung mit einem solchen Wabenkörper dienen der katalytischen Umsetzung von Gasen, insbesondere von Abgasen einer Verbrennungskraftmaschine. Der Wabenkörper bzw. die Vorrichtung können aber auch dazu verwendet werden, andere Reinigungsaufgaben durchzuführen. Der Verwendungsbereich des Wabenkörpers bzw. der Vorrichtung ist im wesentlichen durch ein auf den Wabenkörper aufzubringendes katalytisch aktives Material bestimmt.

### Bezugszeichenliste

- 1: Wabenkörper
- 2: glattes Blech
- 3: gewelltes Blech
- 4: Kanäle
- 5: Mantelfläche
- 6, 7: Stromverteilungsstruktur
- 8, 10, 11: Kragen
- 8a,8b,9,9a,9b,9c: Kragenabschnitte
- 12: Spalt
- 13a, 13b: Spalt
- 14: Stirnfläche
- 15, 16: Längsrand
- 17: Ringspalt
- 18a, 18b, 19, 19a, 19b: radial einwärts gerichtete Kragen
- 20: Mantelrohr
- 21: Wabenkörper
- 22, 23: Stromanschluß
- 24, 25: Öffnung
- 26, 27: Verbindungsstücke
- 28, 29: Isolierschicht
- 30: Inneres Mantelrohr
- 31: Stützelemente
- 32: Ausnehmung
- 33, 34: Abschnitt

## Patentansprüche

1. Elektrisch beheizbarer Wabenkörper (1) zur katalytischen Umsetzung von Gasen, insbesondere von Abgasen einer Verbrennungskraftmaschine, der eine Vielzahl von einem Fluid durchströmbare Kanäle (4) aufweist und der bezüglich seiner Querschnittsfläche und/oder axialen Erstreckung elektrisch aufgeteilt ist, insbesondere mäanderförmig und/oder spiralförmig, wobei an der Mantelfäche (5) wenigstens zwei etwa halbschalenförmig ausgebildeten Stromverteilungsstrukturen (6,7) angeordnet sind, die durch einen Ringspalt (17) vollständig von einem Mantelrohr (20) getrennt sind, dadurch gekennzeichnet, daß jede Stromverteilungsstruktur (6,7) wenigstens einen sich radialauswärts oder -einwärts und in Umfangsrichtung ertreckenden Kragen (8, 8a, 8b, 9, 9a, 9b, 9c, 10, 11, 18a, 18b, 19, 19a, 19b) aufweist.

2. Wabenkörper nach Anspruch 1, dadurch gekennzeichnet, daß jede Stromverteilungsstruktur (6, 7) in Umfangsrichtung zwei oder mehr im Abstand zueinander ausgebildete Kragen (8a, 8b, 9a, 9b, 9c, 18a, 18b, 19a, 19b) aufweist.

3. Wabenkörper nach Anspruch 2, dadurch gekennzeichnet, daß die Kragen (8a, 8b; 9a, 9b, 9c; 18a, 18b; 19a, 19b) in einer gemeinsamen Ebene (E1, E2) ausgebildet sind.

4. Wabenkörper nach Anspruch 2, dadurch gekennzeichnet, daß jede Stromverteilungsstruktur (6, 7) in einer ersten Ebene (E1) sowie in einer zweiten Ebene (E2) mehrere durch Spalte (12, 13a, 13b) voneinander getrennte Kragenabschnitte (8a, 8b; 9a, 9b, 9c; 18a, 18b; 19a, 19b) aufweist, wobei die Kragenabschnitte (8a, 8b) der ersten (E1) oder der zweiten (E2) Ebene die Spalte (12, 13a, 13b) zwischen den Kragenabschnitten (9a, 9b, 9c) der jeweils anderen Ebene (E1, E2) wenigstens teilweise überlappen.

5. Wabenkörper nach einem der Ansprüche 1 bis 4, dadurch gekennzeichnet, daß jeder Kragenabschnitt (8a, 8b; 9a, 9b, 9c; 18a, 18b; 19, 19a, 19b) ein intergraler Bestandteil einer Stromverteilungsstruktur (6, 7) ist.

6. Wabenkörper nach einem der Ansprüche 1 bis 5, dadurch gekennzeichnet, daß die Stromverteilungsstrukturen (6, 7) jeweils einen Kragen (8, 9, 11, 10, 19) aufweisen, der sich über die Gesamtlänge der Stromverteilungsstruktur (6, 7) erstreckt.

7. Wabenkörper nach einem der Ansprüche 1 bis 6, dadurch gekennzeichnet, daß der oder die Kragen (8, 9, 10, 11, 19) durch bördeln der Stromverteilungsstruktur (6, 7) gebildet ist bzw. sind.

8. Wabenkörper nach einem der Ansprüche 1 bis 7, dadurch gekennzeichnet, daß wenigstens ein Kragen (8) mindestens eine Ausnehmung (32) aufweist.

9. Wabenkörper nach Anspruch 8, dadurch gekennzeichnet, daß die Ausnehmung (32) eine Bohrung ist.

10. Wabenkörper nach Anspruch 8, dadurch gekennzeichnet, daß die Ausnehmung (32) sich vom Rand des Kragens (8) zur StromverteilungsStruktur (6) hin erstreckt.

11. Wabenkörper nach Anspruch 8, dadurch gekennzeichnet, daß die Ausnehmung (32) einen ersten sich vom Rand des Kragens (8) zur Stromverteilungsstruktur (6) hin, insbesondere radialeinwärts, erstreckenden Abschnitt (33) und wenigstens einen zweiten sich an den ersten Abschnitt (33) anschließenden in Umfangsrichtung erstreckenden Abschnitt (34) aufweist.

12. Wabenkörper nach einem der Ansprüche 1 bis 11, dadurch gekennzeichnet, daß der oder die Kragen (8, 8a, 8b, 9, 9a, 9b, 9c, 10, 11, 18a, 18b, 19, 19a, 19b) eine Dichtung, vorzugsweise eine Labyrinthdichtung, zwischen dem Mantelrohr (20) und den Stromverteilungsstrukturen (6, 7) bilden.

13. Wabenkörper nach einem der Ansprüche 1 bis 12, dadurch gekennzeichnet, daß zwischen einer jeden Stromverteilungsstruktur (6, 7) und dem Mantel (20) eine Matte aus einem elektrisch isolierenden, temperaturbeständigen Werkstoff anordenbar ist.

14. Wabenkörper nach Anspruch 13, dadurch gekennzeichnet, daß jede Stromverteilungsstruktur (6, 7) sowie die in der ersten Ebene (E1) und in der zweiten Ebene (E2) vorgesehenen Kragenabschnitte (8a, 8b; 9a, 9b, 9c; 18a, 18b; 19a, 19b) eine Aufnahme bilden, in der die Matte bzw. Matten anordenbar ist bzw. sind.

15. Vorrichtung zur katalytischen Umsetzung von Gasen, insbesondere von Abgasen einer Verbrennungskraftmaschine, die wenigstens einen ersten und einen zweiten in einem Mantelrohr (20) benachbart angeordnete, nacheinander von einem Gas durchströmbare Wabenkörper (1, 21) umfaßt, wobei wenigstens der erste ein elektrisch beheizbarer Wabenkörper (1) nach einem der Ansprüche 1 bis 14 ist und wobei die benachbarten Wabenkörper durch elektrisch isolierende Stützelemente (31) miteinander verbunden sind.

16. Vorrichtung nach Anspruch 15, dadurch gekennzeichnet, daß wenigstens ein Teil der Stützelemente (31) mit dem oder den Kragen (8, 9) des Wabenkörpers (1) verbunden ist.

17. Vorrichtung nach Anspruch 16, dadurch gekennzeichnet, daß die Stützelemente (31) mit dem oder den Kragen (8, 9) stofflich verbunden sind.

18. Vorrichtung nach Anspruch 16, dadurch gekennzeichnet, daß die Stützelemente (31) mit dem oder den Kragen (8, 9) formschlüssig verbunden sind.

## Claims

1. An electrically heatable honeycomb body (1) for the catalytic conversion of gases, in particular exhaust gases from an internal combustion engine, which has a plurality of passages (4) through which a fluid can flow and which is electrically divided in respect of its cross-sectional area and/or axial extent, in particular in a meander and/or spiral configuration, wherein arranged at the peripheral surface (5) are at least two current distribution structures (6, 7) which are substantially in the form of half-shells and which are completely separated from a tubular casing (20) by an annular gap (17), characterised in that each current distribution structure (6, 7) has at least one collar (8, 8a, 8b, 9, 9a, 9b, 9c, 10, 11, 18a, 18b, 19, 19a, 19b) which extends radially outwardly or inwardly and in the peripheral direction.

2. A honeycomb body according to claim 1 characterised in that each current distribution structure (6, 7) has in the peripheral direction two or more spaced-apart collars (8a, 8b, 9a, 9b, 9c, 18a, 18b, 19a, 19b).

3. A honeycomb body according to claim 2 characterised in that the collars (8a, 8b; 9a, 9b, 9c; 18a, 18b; 19a, 19b) are provided in a common plane (E1, E2).

4. A honeycomb body according to claim 2 characterised in that each current distribution structure (6, 7) has in a first plane (E1 and in a second plane (E2) a plurality of collar portions (8a, 8b; 9a, 9b, 9c; 18a, 18b; 19a, 19b) which are separated from each other by gaps (12, 13a, 13b), wherein the collar portions (8a, 8b) of the first plane (E1) and the second plane (E2) at least partially overlap the gaps (12, 13a, 13b) between the collar portions (9a, 9b, 9c) of the respective other plane (E1, E2).

5. A honeycomb body according to one of claims 1 to 4 characterised in that each collar portion (8a, 8b; 9a, 9b, 9c; 18a, 18b; 19a, 19a, 19b) is an integral component of a current distribution structure (6, 7).

6. A honeycomb body according to one of claims 1 to 5 characterised in that the current distribution structures (6, 7) each have a respective collar (8, 9, 11, 10, 19) which extends over the entire length of the current distribution structure (6, 7).

7. A honeycomb body according to one of claims 1 to 6 characterised in that the collar or collars (8, 9, 10, 11, 19) is or are formed by flanging of the current distribution structure (6, 7).

8. A honeycomb body according to one of claims 1 to 7 characterised in that at least one collar (8) has at least one opening (32).

9. A honeycomb body according to claim 8 characterised in that the opening (32) is a bore.

10. A honeycomb body according to claim 8 characterised in that the opening (32) extends from the edge of the collar (8) towards the current distribution structure (6).

11. A honeycomb body according to claim 8 characterised in that the opening (32) has a first portion (33) which extends in particular radially inwardly from the edge of the collar (8) towards the current distribution structure (6) and at least one second portion (34) which adjoins the first portion (33) and extends in the peripheral direction.

12. A honeycomb body according to one of claims 1 to 11 characterised in that the collar or collars (8, 8a, 8b, 9, 9a, 9b, 9c, 10, 11, 18a, 18b, 19, 19a, 19b) form a seal, preferably a labyrinth seal, between the tubular casing (20) and the current distribution structures (6, 7).

13. A honeycomb body according to one of claims 1 to 12 characterised in that a mat of an electrically insulating and temperature-resistant material can be arranged between each current distribution structure (6, 7) and the casing (20).

14. A honeycomb body according to claim 13 characterised in that each current distribution structure (6, 7) and the collar portions (8a, 8b; 9a, 9b, 9c; 18a, 18b; 19a, 19b) provided in the first plane (E1) and in the second plane (E2) form a receiving means in which the mat or mats can be arranged.

15. Apparatus for the catalytic conversion of gases, in particular exhaust gases from an internal combustion engine, which includes at least first and second honeycomb bodies (1, 21) which are arranged in adjacent relationship in a tubular casing (20) and through which a gas can successively flow, wherein at least the first is an electrically heatable honeycomb body (1) according to one of claims 1 to 14 and wherein the adjacent honeycomb bodies are connected together by electrically insulating support elements (31).

16. Apparatus according to claim 15 characterised in that at least some of the support elements (31) are connected to the collar or collars (8, 9) of the honeycomb body (1).

17. Apparatus according to claim 16 characterised in that the support elements (31) are connected to a collar or collars (8, 9) by the materials thereof being joined.

18. Apparatus according to claim 16 characterised in that the support elements (31) are connected to the collar or collars (8, 9) by positively locking engagement therewith.

## Revendications

1. Corps alvéolaire (1) pouvant être chauffé électriquement, destiné à la conversion catalytique de gaz, notamment de gaz d'échappement d'un moteur à combustion interne, comportant une pluralité de canaux (4) pouvant être traversés par un fluide, et qui est subdivisé électriquement en ce qui concerne sa surface en section transversale et/ou son extension axiale, notamment en forme de méandres et/ou de spirales, au moins deux structures (6, 7) de distribution de courant ayant sensiblement la forme d'une demi-coque étant disposées sur la surface d'enveloppe (5), lesquelles sont entièrement séparées d'un tube d'enveloppe (20) par une fente annulaire (17), caractérisé en ce que chaque structure (6, 7) de distribution de courant comporte au moins une collerette (8, 8a, 8b, 9, 9a, 9b, 9c, 10, 11, 18a, 18b, 19, 19a, 19b) s'étendant radialement vers l'extérieur ou vers l'intérieur, et dans la direction circonférentielle.

2. Corps alvéolaire selon la revendication 1, caractérisé en ce que chaque structure (6, 7) de distribution de courant comporte dans la direction circonférentielle deux ou plusieurs collerettes (8a, 8b, 9a, 9b, 9c, 18a, 18b, 19a, 19b) formées à une certaine distance les unes des autres.

3. Corps alvéolaire selon la revendication 2, caractérisé en ce que les collerettes (8a, 8b ; 9a, 9b, 9c ; 18a, 18b ; 19a, 19b) sont formées dans un plan commun (E1, E2).

4. Corps alvéolaire selon la revendication 2, caractérisé en ce que chaque structure (6, 7) de distribution de courant comporte dans un premier plan (E1), ainsi que dans un deuxième plan (E2), plusieurs sections de collerettes (8a, 8b ; 9a, 9b, 9c ; 18a, 18b ; 19a, 19b) séparées les unes des autres par des fentes (12, 13a, 13b), les sections de collerettes (8a, 8b) du premier plan (E1) ou du deuxième plan (E2) recouvrant, au moins partiellement, les fentes (12, 13a, 13b) entre les sections de collerettes (9a, 9b, 9c) de l'autre plan respectif (E1, E2).

5. Corps alvéolaire selon l'une quelconque des revendications 1 à 4, caractérisé en ce que chaque section de collerette (8a, 8b ; 9a, 9b, 9c ; 18a, 18b ; 19, 19a, 19b) fait partie intégrante d'une structure (6, 7) de distribution de courant.

6. Corps alvéolaire selon l'une quelconque des revendications 1 à 5, caractérisé en ce que les structures (6, 7) de distribution de courant comportent chacune une collerette (8, 9, 11, 10, 19) qui s'étend sur l'ensemble de la longueur de la structure (6, 7) de distribution de courant.

7. Corps alvéolaire selon l'une quelconque des revendications 1 à 6, caractérisé en ce que la ou les collerettes (8, 9, 10, 11, 19) est(sont) formée(s) par un repli de la structure (6, 7) de distribution de courant.

8. Corps alvéolaire selon l'une quelconque des revendications 1 à 7, caractérisé en ce qu'au moins une collerette (8) comporte au moins un évidement (32).

9. Corps alvéolaire selon la revendication 8, caractérisé en ce que l'évidement (32) est un perçage.

10. Corps alvéolaire selon la revendication 8, caractérisé en ce que l'évidement (32) s'étend du bord de la collerette (8) jusqu'à la structure (6) de distribution de courant.

11. Corps alvéolaire selon la revendication 8, caractérisé en ce que l'évidement (32) comporte une première section (33) qui s'étend du bord de la collerette (8) jusqu'à la structure (6) de distribution de courant, notamment radialement vers l'intérieur, et au moins une deuxième section (34) se raccordant à la première section (33), qui s'étend dans la direction circonférentielle.

12. Corps alvéolaire selon l'une quelconque des revendications 1 à 11, caractérisé en ce que la ou les collerettes (8, 8a, 8b, 9, 9a, 9b, 9c, 10, 11, 18a, 18b, 19, 19a, 19b) forment un joint, de préférence un joint à labyrinthe, entre le tube d'enveloppe (20) et les structures (6, 7) de distribution de courant.

13. Corps alvéolaire selon l'une quelconque des revendications 1 à 12, caractérisé en ce qu'une tresse en un matériau électriquement isolant et résistant à la température peut être disposée entre chaque structure (6, 7) de distribution de courant et l'enveloppe (20).

14. Corps alvéolaire selon la revendication 13, caractérisé en ce que chaque structure (6, 7) de distribution de courant, ainsi que les sections de collerettes (8a, 8b ; 9a, 9b, 9c ; 18a, 18b ; 19a, 19b) prévues dans le premier plan (E1) et dans le deuxième plan (E2), forment un logement dans lequel la tresse ou les tresses peut (peuvent) être disposée(s).

15. Dispositif destiné à la conversion catalytique de gaz, notamment de gaz d'échappement d'un moteur à combustion interne, comportant au moins un premier et un second corps alvéolaire (1, 21) pouvant être traversés successivement par un gaz, qui sont disposés au voisinage l'un de l'autre dans un tube d'enveloppe (20), le premier au moins étant un corps alvéolaire (1) pouvant être chauffé électriquement selon l'une quelconque des revendications 1 à 14, et les corps alvéolaires voisins étant reliés entre eux par des éléments de support (31) électriquement isolants.

16. Dispositif selon la revendication 15, caractérisé en ce qu'une partie au moins des éléments de support (31) est reliée à la ou aux collerettes (8, 9) du corps alvéolaire (1).

17. Dispositif selon la revendication 16, caractérisé en ce que les éléments de support (31) sont reliés matériellement à la ou aux collerettes (8, 9).

18. Dispositif selon la revendication 16, caractérisé en ce que éléments de support (31) sont reliés par complémentarité de forme à la ou aux collerettes (8, 9).
